(19) Europäisches Patentamt

European Patent Office

Office européen des brevets

(11) EP 0 790 544 B1

(12) EUROPÄISCHE PATENTSCHRIFT

(45) Veröffentlichungstag und Bekanntmachung des Hinweises auf die Patenterteilung:
25.04.2001 Patentblatt 2001/17

(51) Int Cl.$^7$: G05D 7/06

(21) Anmeldenummer: 97101934.4

(22) Anmeldetag: 06.02.1997

(54) **Vorrichtung zum Regeln eines Volumenstromes**

Volumetric flow control device

Dispositif de régulation d'un débit volumétrique

(84) Benannte Vertragsstaaten:
**DE FR GB**

(30) Priorität: **13.02.1996 DE 19605247**

(43) Veröffentlichungstag der Anmeldung:
**20.08.1997 Patentblatt 1997/34**

(73) Patentinhaber: **SIEMENS AKTIENGESELLSCHAFT**
**80333 München (DE)**

(72) Erfinder: **Krüger, Hinrich, Dr.**
**93053 Regensburg (DE)**

(56) Entgegenhaltungen:
**FR-A- 1 312 231          GB-A- 872 226**
**US-A- 5 197 507**

• **PATENT ABSTRACTS OF JAPAN vol. 8, no. 40 (M-278), 21.Februar 1984 & JP 58 196375 A (DAIKIN KOGYO KK), 15.November 1983,**

**Beschreibung**

Die Erfindung betrifft eine Vorrichtung zum Regeln eines Volumenstromes gemäß dem Oberbegriff des Anspruchs 1 und gemäß dem Oberbegriff des Anspruchs 4.

Aus der DE 38 44 056 A1 ist bereits ein Ventil zur Regelung eines Volumenstromes bekannt, das in Abhängigkeit vom Druck, der am Ventilsitz herscht, den Öffnungsquerschnitt so einstellt, daß bei einem höheren Druck der Volumenstrom verkleinert wird.

Die Aufgabe der Erfindung beruht darin, eine Vorrichtung zum Regeln eines Volumenstromes bereitzustellen, mit der ein geringer Volumenstrom mit hoher Genauigkeit einstellbar ist.

Die Aufgabe der Erfindung wird durch die Merkmale des Anspruchs 1 und durch die Merkmale des Anspruchs 4 gelöst.

Die Vorrichtung entsprechend dem Anspruch 1 und die Vorrichtung entsprechend dem Anspruch 4 haben den Vorteil, daß bereits geringe Volumenströme sehr genau eingestellt werden können. Dies wird dadurch erreicht, daß der Druck auf der Zulaufseite mit zunehmendem Volumenstrom, d. h. mit zunehmendem Öffnungsquerschnitt, erhöht wird. Zudem weist die erfindungsgemäße Vorrichtung eine verbesserte Funktion gegenüber dem Stand der Technik auf und ist kostengünstiger zu fertigen.

Vorteilhafte Weiterbildungen der Erfindung sind in den Unteransprüchen angegeben.

Die Erfindung wird anhand der Figuren näher erläutert; es zeigen:

Figur 1     ein erstes Regelventil,
Figur 2     ein zweites Regelventil,
Figur 3     einen Öffnungsschlitz,
Figur 4     drittes Regelventil,
Figur 5     ein viertes Regelventil,
Figur 6     erste Diagramme und
Figur 7     zweite Diagramme.

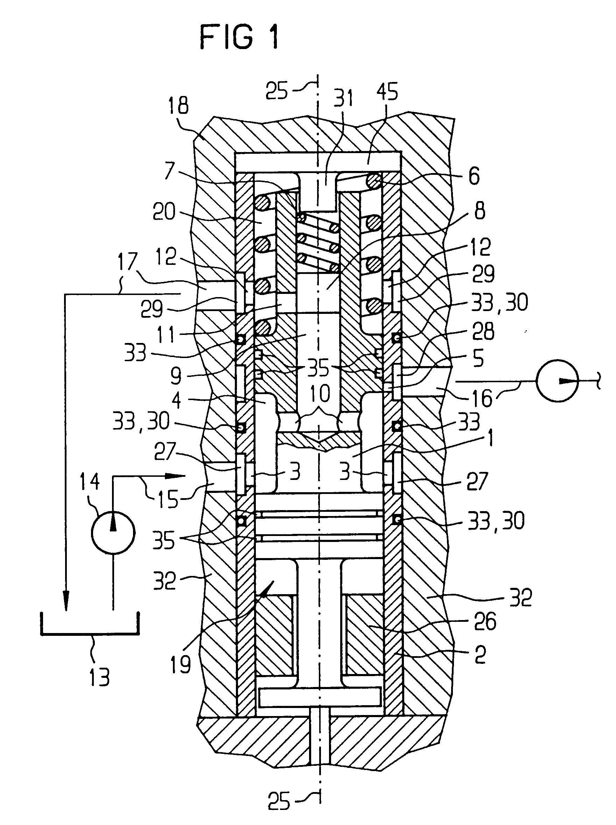

Figur 1 zeigt im Querschnitt ein Regelventil zum Regeln eines Volumenstromes, das radialsymmetrisch zu einer Mittensymmetrieachse 25 ausgebildet ist. Das Regelventil 18 weist ein längliches Schließglied 1 auf, das von einer entsprechend an das Schließglied 1 angepaßten, länglichen und im Querschnitt kreisförmigen, Hülse 2 umfaßt ist. Die Hülse 2 umgrenzt einen zylinderförmigen Hohlraum 19, in dem das Schließglied 1 eingebracht ist, wobei das Schließglied 1 in Längsrichtung parallel zur Mittensymmetrieachse 25 beweglich angeordnet ist. Die Hülse 2 ist selbst wiederum in ein Gehäuse 32 eingeschoben.

Das Schließglied 1 ist derart geformt, daß zwei zur Mittensymmetrieachse 25 ringförmige Hohlräume zwischen dem Schließglied 1 und der Hülse 2 ausgebildet sind. Der erste Hohlraum bildet einen Druckraum 4, der von der Hülse 2 und von einer ringförmig umlaufenden Ausnehmung des Schließgliedes 1 dicht begrenzt wird. Der Druckraum 4 ist über Zulauföffnungen 3, die in die Hülse 2 eingebracht sind, mit einer ringförmig umlaufenden ersten Umlaufnut 27, die auf der Außenseite der Hülse 2 eingebracht ist, verbunden. An die erste Umlaufnut 27 ist eine Zuleitung 15 angeschlossen.

In das Schließglied 1 ist eine längliche, zylinderförmige Druckkammer 9 eingebracht, die in Längsrichtung parallel und mittig zur Mittensymmetrieachse 25 angeordnet ist. Die Druckkammer 9 ist mit einem unteren Ende annähernd auf gleicher Höhe wie der Druckraum 4 angeordnet und erstreckt sich in Richtung auf eine Führungsnase 31, die von einem Abschlußstück 45 der Hülse 2 gebildet ist, wobei die Führungsnase 31 in den Druckraum 9 teilweise hineinragt. Die Führungsnase 31 ist in der Form an den Druckraum 9 angepaßt und dient zur Führung des Schließgliedes 1 und einer zweiten Feder 7. In der Druckkammer 9 ist ein länglicher und im Querschnitt kreisförmiger Kolben 8 angeordnet, der entlang der Längsrichtung der Druckkammer 9 verschiebbar angeordnet ist und die Druckkammer 9 zur Führungsnase 31 hin abdichtet. In der Ruhestellung befindet sich der Kolben 8 über einer Absteueröffnung 11, so daß die Absteueröffnung 11 geschlossen ist. Zwischen dem Kolben 8 und der Führungsnase 31 ist eine zweite Feder 7 eingebracht, die beim Verschieben des Kolbens 8 in eine Arbeitsposition, d.h. beim Verschieben in Richtung auf die Führungsnase 31, eine Federkraft entgegensetzt. Zum Öffnen der Absteueröffnung 11 muß der Kolben 8 gegen die Federkraft der zweiten Feder 7 in die Arbeitsposition bewegt werden. Der Druckkammer 9 ist über eine Verbindungsbohrung 10 mit dem Druckraum 4 und über die Absteueröffnung 11 mit einer Auslaßkammer 20 verbunden.

Die Auslaßkammer 20 befindet sich im oberen Bereich innerhalb der Hülse 2 und ist radialsymmetrisch zur Mittensymmetrieachse 25 ausgebildet. Ein erster Teil der Auslaßkammer 20 wird von der Hülse 2, dem Schließglied 1 und der Führungsnase 31 begrenzt. Ein zweiter Teil der Auslaßkammer 20 wird von dem Bereich zwischen dem Kolben 8 und der Führungsnase 31 gebildet. Der erste und der zweite Teil der Auslaßkammer 20 sind miteinander verbunden. Über eine Ablauföffnung 12, die in die Hülse 2 eingebracht ist, ist die Auslaßkammer 20 mit einer zweiten, radial zur Mittensymmetrieachse 25 umlaufenden Umlaufnut 29 verbunden, die auf der Außenseite der Hülse 2 angeordnet ist. Die zweite Umlaufnut 29 ist an eine Rückleitung 17 angeschlossen, die zu einem Tank 13 führt.

In Längsrichtung der Hülse 2 gesehen ist zwischen der Ablauföffnung 12 und der Zulauföffnung 3 eine Austrittsöffnung 5 eingebracht, die in der Ruheposition des Schließgliedes 1 von dem Schließglied 1 verschlossen ist. Die Austrittsöffnung 5 ist, wenn das Schließglied 1 sich in der Ruheposition befindet, angrenzend an den Druckraum 4 angeordnet, so daß die Austrittsöffnung 5 geöffnet wird, wenn das Schließglied 1 in Richtung auf die Führungsnase 31 in eine Arbeitsposition bewegt wird. Die Austrittsöffnung 5 ist mit einer dritten, ringförmig zur Mittensymmetrieachse 25 umlaufenden Umlaufnut 28 verbunden, die auf der Außenseite der Hülse 2 eingebracht ist. Die dritte Umlaufnut 28 ist an eine Ableitung 16 angeschlossen, die zu einem Verbraucher geführt ist.

In der Auslaßkammer 20 ist zwischen dem Abschlußstück 45 und dem Schließglied 1 eine erste Feder 6 eingebracht, die eine Federkraft auf das Schließglied ausübt, wenn das Schließglied 1 in Richtung auf die Führungsnase 31 in eine Arbeitsposition zum Öffnen der Austrittsöffnung 5 verschoben wird. Zum Bewegen des Schließgliedes 1 ist ein Elektromagnet 26 im unteren Bereich der Hülse 2 angeordnet.

Unterhalb der Druckkammer 4 und zwischen der Druckkammer 4 und der Auslaßkammer 20 sind jeweils senkrecht zur Mittensymmetrieachse 25 ringförmig umlaufend auf der Außenseite des Schließgliedes 1 fünfte Umlaufnuten 35 eingebracht, die den Bereich zwischen dem Schließglied 1 und der Hülse 2 abdichten. Vorzugsweise ist ein Dichtring in der fünften Umlaufnut 35 eingelegt.

Es sind mehrere Zulauföffnungen 3, eine Austrittsöffnung 5 und mehrere Ablauföffnungen 12 jeweils radialsymmetrisch zur Mittensymmetrieachs 25 in der Hülse 2 im gleichen Winkelabstand zueinander angeordnet. Vorzugsweise sind jeweils zwei Zulauföffnungen, zwei Ablauföffnungen und eine Austrittsöffnung angeordnet. Die Zulauf- und Ablauföffnungen 3,12 sind als runde Bohrungen ausgebildet, wohingegen die Austrittsöffnung 5 zur genauen Querschnittssteuerung schlitzförmig ausgebildet ist.

Auf der Außenseite der Hülse 2 ist zwischen der ersten Umlaufnut 27 und der dritten Umlaufnut 28, zwischen der dritten Umlaufnut 28 und der zweiten Umlaufnut 29 und unterhalb der ersten Umlaufnut 27 jeweils in einer Kreisebene senkrecht zur Mittensymmetrieachse 25 umlaufend je eine vierte Umlaufnut 33 in die Hülse 2 eingebracht, in der ein Dichtring 30 eingelegt ist, der die Hülse 2 mit dem Gehäuse 32 abdichtet.

Im folgenden wird die Funktionsweise des Regelventils 18 näher erläutert: Eine Pumpe 14 ist an dem Tank 13 angeschlossen und pumpt Kraftstoff über die Zuleitung 15 in den Druckraum 4 und über die Verbindungsöffnungen 10 weiter in die Druckkammer 9. Es können anstelle von Kraftstoff auch andere Flüssigkeiten oder Gase, insbesondere Flüssiggase, als Volumenstrom verwendet werden. In der Ruhestellung des Schließglied 1 ist die Austrittsöffnung 5 vom Schließglied 1 verschlossen. In der Ruheposition des Kolbens 8 ist die Absteueröffnung 11 durch den Kolben 8 verschlossen.

Wird der Druck des Kraftstoffes von der Pumpe 14 im Druckraum 4 und in der Druckkammer 9 erhöht, so daß der Druck des Kraftstoffes größer als die Federkraft der zweiten Feder 7 ist, so wird der Kolben 8 gegen die zweite Feder 7 gedrückt und der Kolben 8 gibt mit zunehmenden Druck eine immer größere Fläche der Absteueröffnung 11 frei. Über die geöffnete Absteueröffnung 11 fließt der Kraftstoff über die Auslaßkammer 20, die Ablauföffnung 12 und die zweite Umlaufnut 29 in die Rückleitung 17 und damit zum Tank 13 zurück.

Der Druck des Kraftstoffes im Druckraum 4 und in der Druckkammer 9 wird durch eine geeignete Wahl der Geometrie des Kolbens 8 und der Anordnung des Kolbens 8 in bezug auf die Absteueröffnung 11 und die Wahl der Federkraft der zweiten Feder 7 festgelegt. Der Kolben 8, die Absteueröffnung 11 und die zweite Feder 7 stellen ein Kolbendruckregelventil dar.

Wird nun das Schließglied 1 durch den Elektromagneten 26 von der Ruheposition in eine Arbeitsposition gegen die erste Feder 6 in Richtung auf die Führungsnase 31 verschoben, so wird gleichzeitig die Druckkammer 4 in Richtung auf die Austrittsöffnung 5 verschoben und damit die Austrittsöffnung 5 geöffnet. Bei geöffneter Austrittsöffnung 5 fließt der Kraftstoff vom Druckraum 4 über die Austrittsöffnung 5 und die dritte Umlaufnut 28 in die Ableitung 16 zu einem Verbraucher.

Mit dem Verschieben des Schließgliedes 1 aus der Ruheposition in die Arbeitsposition wird die Absteueröffnung 11 gegenüber dem Kolben 8 in Richtung auf die zweite Feder 7 verschoben, so daß der Kolben 8 einen größeren Weg gegen die zweite Feder 7 verschoben werden muß, um die Absteueröffnung 11 zu öffnen, wozu ein größerer Druck in der Druckkammer 9 notwendig ist. Die Folge davon ist, daß der Druck im Druckraum 4 und in der Druckkammer 9 mit zunehmender Öffnung der Austrittsöffnung 5 zunimmt, wobei vorausgesetzt wird, daß die Pumpe 14 einen ausreichend großen Druck aufbaut, so daß der Kolben 8 gegen die zweite Feder 7 verschoben wird. Der im Druckraum 4 und in der Druckkammer 9 maximal erreichbare Druck ist unter anderem durch die Pumpleistung der Pumpe 14 vorgegeben, die entsprechend auszulegen ist.

Die Beziehung des Drucks des Kraftstoffes im Druckraum 4 und in der Druckkammer 9 in Abhängigkeit vom geöffneten Querschnitt der Austrittsöffnung 5 wird durch eine entsprechende Größe der Austrittsöffnung 5, der Federkraft der ersten Feder 6, der Lage des Schließgliedes 1 in bezug auf die Austrittsöffnung 5, der Position der Absteueröffnung 11 in bezug auf die Ruheposition des Kolbens 8, der Federkraft der zweiten Feder 7 und der Pumpleistung der Pumpe 14 festgelegt.

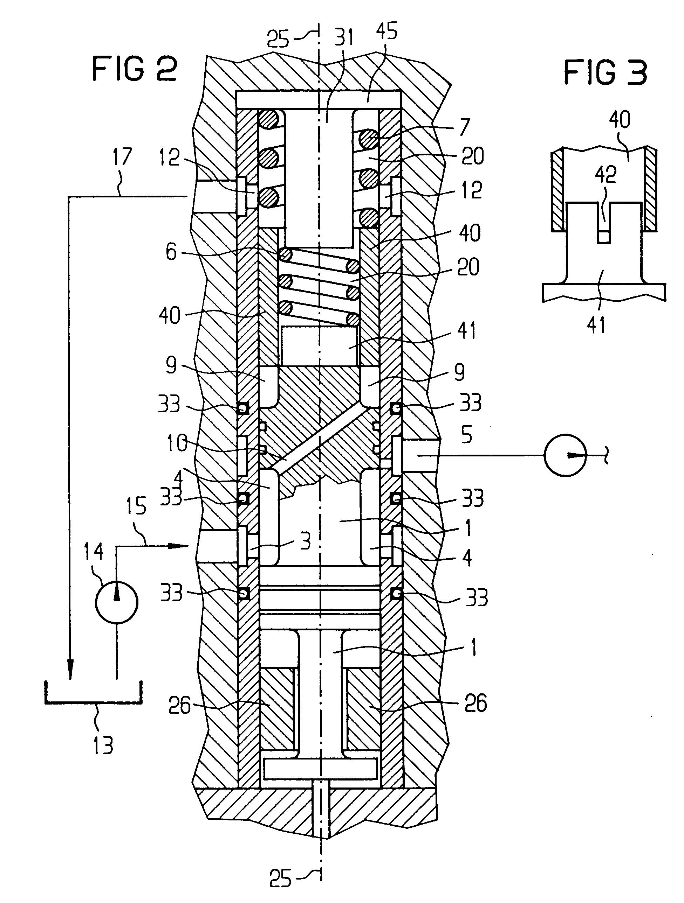

Figur 2 zeigt ein zweites Ausführungsbeispiel, wobei im folgenden nur auf die Unterschiede zu Figur 1 eingegangen wird. Die Druckkammer 9 ist ringförmig und radialsymmetrisch ausgebildet und wird vom Schließglied 1, einer zweiten Hülse 40 und der ersten Hülse 2 begrenzt. Das Schließglied 1 trennt die Druckkammer 9 von dem Druckraum 4, wobei jedoch der Druckraum 4 über mindestens eine Verbindungsbohrung 10 mit der Druckkammer 9 verbunden ist, die in das Schließglied 1 eingebracht ist.

Ein oberes Endstück 41 des Schließgliedes 1 ist zylinderförmig ausgebildet und symmetrisch zu der Führungsnase 31 angeordnet, wobei der Durchmesser des Endstückes 41 dem Durchmesser der Führungsnase 31 entspricht. Zwischen dem Endstück 41 und der Führungsnase 31 ist eine erste Feder 6 eingebracht. Die Führungsnase 31 und das von der Führungsnase 31 beabstandete Endstück 41 werden von einer zweiten, in Längsrichtung parallel zur Mittensymmetrieachse 25 beweglichen Hülse 40 umfaßt, wobei die zweite Hülse 40 den Raum zwischen dem Schließglied 1 und der Hülse 2 dicht abschließt, so daß die Druckkammer 9 von der zweiten Hülse 40, dem Schließglied 1 und der Hülse 2 gebildet wird. Zwischen der zweiten Hülse 40 und dem Abschlußstück 45 ist eine zweite Feder 7 eingelegt, die einer Bewegung der zweiten Hülse 40 in Richtung auf die Führungsnase 31 entgegenwirkt.

Die Auslaßkammer 20 wird in diesem Ausführungsbeispiel von einem ersten, ringförmigen Raum, der von der Führungsnase 31, der Hülse 2 und der zweiten Hülse 40 begrenzt wird, und von einem zweiten, zylinderförmigen Raum, der von der zweiten Hülse 40, der Führungsnase 31 und dem Endstück 41 begrenzt wird, gebildet, wobei der erste und der zweite Raum miteinander verbunden sind.

Figur 3 zeigt eine genaue Ansicht vom Endstück 41 des Schließgliedes 1, in das ein Ablaufschlitz 42 eingebracht ist, der in einer Ruheposition von der zweiten Hülse 40 verschlossen ist und der in einer Arbeitsposition von der zweiten Hülse 40 mindestens teilweise geöffnet wird.

Im folgenden wird anhand der Figuren 2 und 3 die Funktionsweise des zweiten Ausführungsbeispieles erläutert: In der Ruheposition des Schließgliedes 1 ist die Austrittsöffnung 5 vom Schließglied 1 verschlossen. Der Volumenstrom fließt über die Zulauföffnung 3, den Druckraum 4, die Verbindungsbohrung 10 in die Druckkammer 9. Wenn der Druck in der Druckkammer 9 groß genug ist, wird die zweite Hülse 40 in Richtung auf die Führungsnase 31 gegen die zweite Feder 7 gedrückt und der Ablaufschlitz 42 wird geöffnet, so daß der Volumenstrom über die Ablauföffnung 12 und die Rückleitung 17 zurück zum Tank 13 fließt.

Wird nun das Schließglied 1 vom Elektromagneten 26 in Richtung auf die Führungsnase 31 gegen die erste Feder 6 geschoben, so wird die Austrittsöffnung 5 teilweise geöffnet, so daß mindestens ein Teil des Volumenstromes über die Austrittsöffnung 5 abfließt. Gleichzeitig wird der Ablaufschlitz 42 in Richtung auf die Führungsnase 31 bewegt, so daß die zweite Hülse 40 eine größere Strecke gegen die zweite Feder 7 bewegt werden muß, um den Ablaufschlitz 42 zu öffnen. Dadurch ist ein Öffnen des Ablaufschlitzes 42 erst mit einem größeren Druck des Volumenstromes in der Druckkammer 9 möglich ist. Die Folge davon ist, daß der Druck in der Druckkammer 9 mit zunehmender Öffnung der Austrittsöffnung 5 zunimmt.

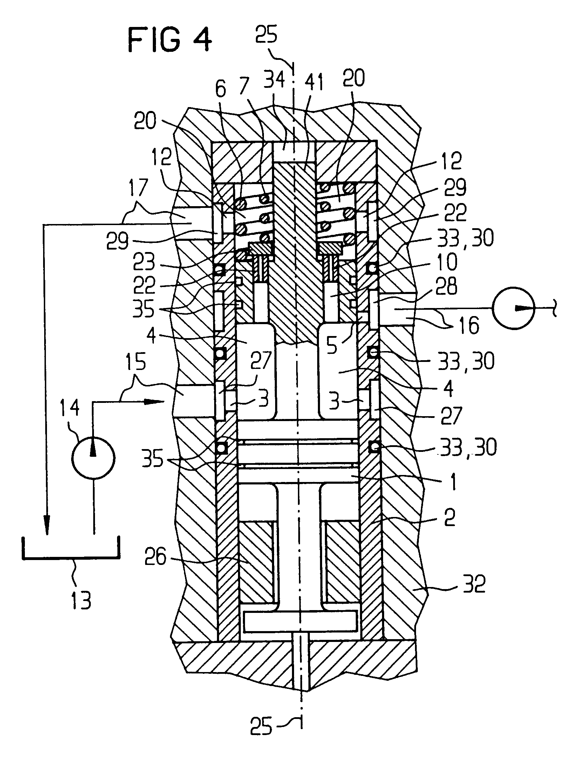

Figur 4 zeigt eine weitere Ausführungsform der Erfindung, wobei jedoch die Druckkammer 9 entfallen ist und der Druckraum 4 direkt über die Verbindungsbohrung 10 mit der Auslaßkammer 20 in Verbindung steht. In der Verbindungsbohrung 10 ist eine Verbindungshülse 22 eingebracht, die den Querschnitt der Verbindungsbohrung 10 verkleinert und entsprechend dem gewünschten Querschnit gewählt wird. Über der Verbindungshülse 22 ist eine scheibenförmige Druckplatte 23 mit einer mittigen Ausnehmung angeordnet, die von der zweiten Feder 7 auf die Verbindungshülse 22 gedrückt wird, so daß in der Ruheposition der Druckplatte 23 die Verbindungsbohrung 10 verschlossen ist. Die Druckplatte ist als Ringscheibe ausgebildet, durch deren mittige Ausnehmung das Endstück 41 geführt ist. Vorzugsweise sind zwei bis vier Verbindungsbohrungen 10 in das Schließglied eingebracht, die vorzugsweise parallel zur Mittensymmetrieachse 25 verlaufen und die in einer Ebene senkrecht zur Mittensymmetrieachse 25 auf einem Kreis mit gleich großen Winkelabstände zueinander angeordnet sind.

In der Auslaßkammer 20 ist die erste Feder 6 eingebracht, die das Schließglied 1 in der Ruheposition hält. Das Endstück 41 ragt in eine mittig zur Mittensymmetrieachse angeordnet Führungsausnehmung 34, wodurch das Schließglied 1 seitlich geführt ist. Das Endstück 41 dient als Führung der zweiten Feder 7, die als Spiralfeder ausgebildet ist und das Endstück 41 umfaßt.

Unterhalb der Druckkammer 4 und zwischen der Druckkammer 4 und der Auslaßkammer 21 sind jeweils senkrecht zur Mittensymmetrieachse 25 ringförmig umlaufende, auf der Außenseite des Schließgliedes 1 eingebrachte, fünfte Umlaufnuten 35 angeordnet, die den Bereich zwischen dem Schließglied 1 und der Hülse 2 dicht abschließen. Vorzugsweise ist in die fünfte Umlaufnut 35 ein Dichtungsring eingelegt.

Zwischen der ersten 27 und der dritten 28 und zwischen der dritten 28 und der zweiten 29 und unterhalb der ersten Umlaufnut 27 ist jeweils auf der Außenseite der Hülse 2 eine vierte Umlaufnut 33 eingebracht, die den Bereich zwischen der Hülse 2 und dem Gehäuse 32 dicht abschließt. Vorzugsweise ist in die vierte Umlaufnut 33 ein Dichtungsring 30 eingelegt.

Es sind eine oder mehrere Zulauföffnungen 3 und eine oder mehrere Ablauföffnungen 12 jeweils radialsymmetrisch zur Mittensymmetrielinie 25 im gleichen Winkelabstand zueinander in der Hülse 2 eingebracht. Vorzugsweise sind jeweils zwei Zulauföffnungen und zwei Ablauföffnungen auf einem Kreis angeordnet, wohingegen nur eine Austrittsöffnung 5 vorgesehen ist.

Im folgenden wird die Funktionsweise der Figur 4 näher erläutert: In der Ruheposition verschließt das Schließglied 1 die Austrittsöffnung 5. Der von der Pumpe 14 in den Druckraum 4 beförderte Kraftstoff drückt die Druckplatte 23 gegen die Federwirkung der zweiten Feder 7 von der Verbindungsbohrung 10 weg, so daß der Volumenstrom vom Druckraum 4 über die Verbindungshülse 23 und die Ablauföffnung 12 zur Rückleitung 17 in den Tank 13 fließt.

Wird nun das Schließglied 1 vom Elektromagneten 26 gegen die Federkraft der ersten Feder 6 von der Ruheposition in die Arbeitsposition in Richtung auf die Führungsausnehmung 34 bewegt, so wird der Druckraum 4 mit der Austrittsöffnung 5 verbunden, so daß mindestens ein Teil des Volumenstromes über die Austrittsöffnung zum Verbraucher fließt, wobei der Druckraum 4 weiterhin mit der Zulauföffnung 3 verbunden bleibt.

Durch die Verschiebung des Schließgliedes 1 in die Arbeitsposition wird die Druckplatte 23 gegen die zweite Feder 7 gedrückt, so daß die zweite Feder 7 vorgespannt wird und ein größerer Druck notwendig ist, um die Druckplatte 23 von der Verbindungshülse 22 abzuheben und damit die Verbindung vom Druckraum 4 zur Auslaßkammer 21 zu öffnen. Aufgrund der geometrischen Anordnung wird mit zunehmender Verschiebung des Schließgliedes 1 in Richtung auf die erste Feder 6 die Austrittsöffnung 5 weiter geöffnet und die zweite Feder 7 stärker vorgespannt, so daß ein größerer Druck im Druckraum 4 notwendig ist, um die Druckplatte 23 von der Verbindungshülse 22 abzuheben. Auf diese Weise wird erreicht, daß sich mit zunehmender Öffnung der Austrittsöffnung 5 ein zunehmender Druck im Druckraum 4 einstellt.

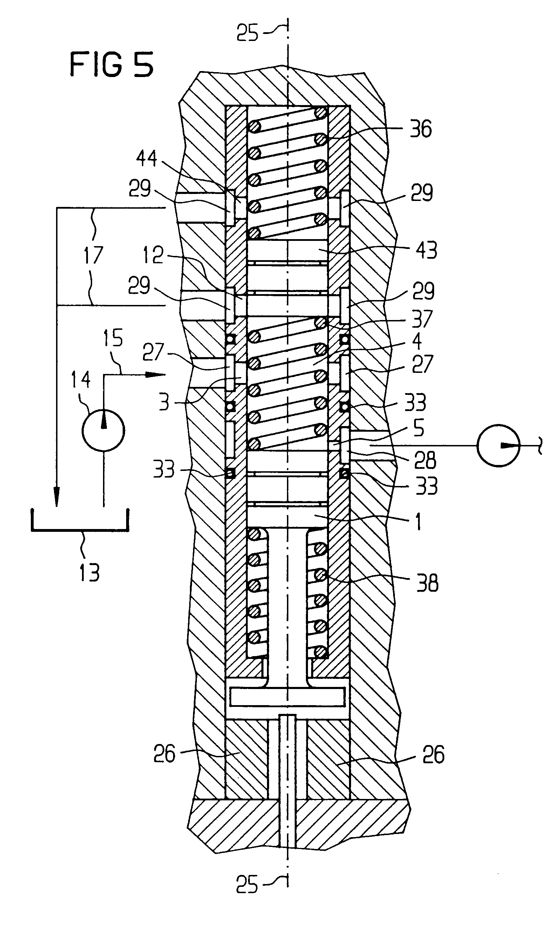

Figur 5 zeigt ein besonders einfach zu fertigendes viertes Ausführungsbeispiel, bei dem der Druckraum 4 von der Hülse 2, dem Schließglied 1 und einem zweiten Kolben 43 gebildet wird. Der zweite Kolben 43 ist entprechend der Hülse 2 ausgebildet und dichtet die Druckkammer 4 ab. Zwischen dem zweiten Kolben 43 und dem Schließglied 1 ist eine dritte Feder 37 eingebracht. Zudem ist zwischen dem zweiten Kolben 43 und dem oberen Ende der Hülse 2 eine vierte Feder 36 und zwischen dem Schließglied 1 und dem unteren Ende der Hülse 2 eine fünfte Feder 38 eingebracht.

In dem Bereich zwischen dem zweiten Kolben 43 und dem oberen Ende der Hülse 2 ist eine zweite Ablauföffnung 44 in die Hülse 2 eingebracht, die in eine zweite Umlaufnut 29 mündet, die auf der Außenseite der Hülse 2 eingebracht ist. Die zweite Umlaufnut 29 ist an eine Rückleitung 17 angeschlossen, die zum Tank 13 führt.

In dem Bereich zwischen dem zweiten Kolben 43 und dem Schließglied 1 ist die Zulauföffnung 3 in die Hülse 2 eingebracht, die in die erste Umlaufnut 27 mündet, die an eine Zuleitung 15 angeschlossen ist. In die Hülse 2 ist zudem noch eine erste Ablauföffnung 12 eingebracht, die über eine weitere zweite Umlaufnut 29 an eine Rückleitung 17 angeschlossen ist, die in dem Bereich zwischen dem Kolben 43 und dem Schließglied 1, angrenzend an den zweiten Kolben 43, angeordnet ist.

Eine Austrittsöffnung 5, die in die dritte Umlaufnut 28 mündet, ist ebenfalls in die Hülse 2 eingebracht und mit einer Ableitung 16 verbunden. Die Austrittsöffnung 5 ist in dem Bereich zwischen dem zweiten Kolben 43 und dem Schließglied 1 angrenzend an das Schließglied angeordnet.

Im folgenden wird die Funktionsweise der Figur 5 näher erläutert. In der Ruheposition des Schließgliedes 1 und des zweiten Kolbens 43 ist die Zulauföffnung 3 geöffnet, die Austrittsöffnung 5 vom Schließglied 1 geschlossen und die erste Ablauföffnung 12 teilweise durch den zweiten Kolben 43 geöffnet. Wird nun durch den Elektromagneten 26 das Schließglied 1 nach unten gezogen und die Abströmöffnung 5 geöffnet, so wird auch die vierte Feder 36 nach unten verschoben, so daß die Kraft, mit der die vierte Feder 36 den zweiten Kolben 43 nach oben drückt, kleiner wird. Daraufhin ist eine größere Druckkraft erforderlich, um den zweiten Kolben 43 weiterhin gegen die Kraft der vierten Feder 36 in seiner Lage zu halten, so daß der überschüssige Volumenstrom durch die teilweise geöffnete erste Ablauföffnung 12 ablaufen kann. Die Folge davon ist, daß sich im Druckraum 4 ein höherer Druck aufbaut. Auf diese Weise wird erreicht, daß bei zunehmender Öffnung der Austrittsöffnung 5 der Druck im Druckraum 4 erhöht wird. Die zweite Ablauföffnung 12 dient dazu, daß Kraftstoff, der in den Bereich gelangt, in dem die vierte Feder 36 angeordnet ist, zum Tank 13 zurückgeführt wird.

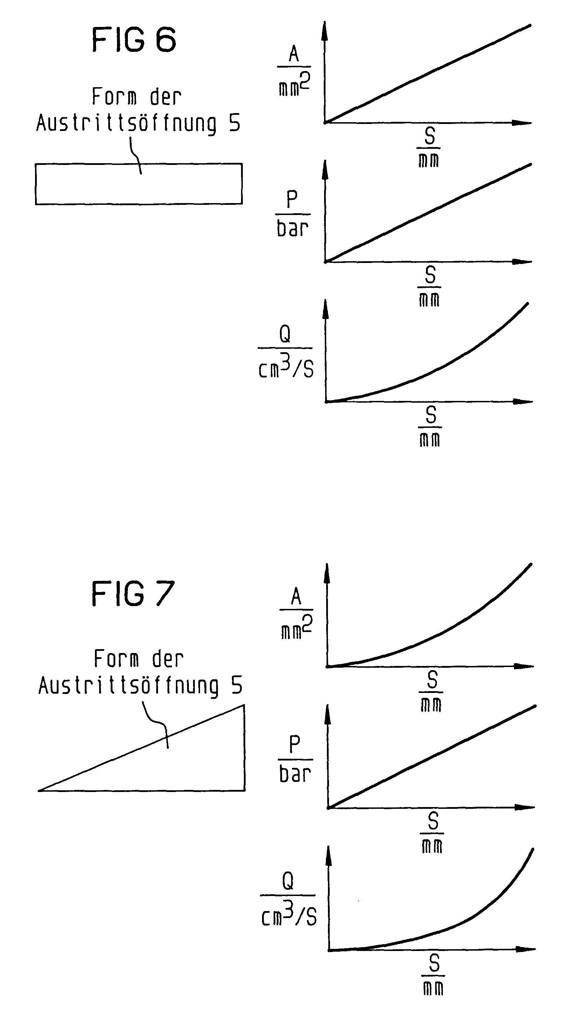

Figur 6 zeigt einen rechteckigen Querschnitt F der Austrittsöffnung 5 und die Größe der geöffneten Fläche A der Austrittsöffnung 5 in Abhängigkeit vom Verschiebeweg S des Schließgliedes 1. Weiterhin ist der Druck P des Volumenstromes im Druckraum 4 in Abhängigkeit vom Verschiebeweg S dargestellt. Abschließend ist noch der Volumenstrom Q ($cm^3$/sec) in Abhängigkeit vom Verschiebeweg S des Schließgliedes 1 angegeben.

Die geöffnete Fläche A und der Druck P nehmen linear mit dem Verschiebeweg S zu. Der Volumenstrom Q ist proportional zur geöffneten Fläche A * $\sqrt{P}$.

Figur 7 zeigt die Abhängigkeit der geöffneten Fläche A des Druckes P und des Volumenstromes Q für einen dreieckförmigen Querschnitt F der Austrittsöffnung 5. Die geöffnete Fläche A der Austrittsöffnung 5 nimmt mit dem Verschiebeweg S quadratisch zu. Der Druck im Druckraum 4 ist linear proportional zum Verschiebeweg S. Der Volumenstrom Q zeigt eine kubische Abhängigkeit (proportional $S^4$) vom Verschiebeweg S. Der Volumenstrom Q ist proportional zur geöffneten Fläche A * $\sqrt{P}$.

Wie aus den Figuren 6 und 7 ersichtlich ist, nimmt der Volumenstrom in Abhängigkeit von dem Verschiebeweg S des Schließgliedes 1 für kleine Werte des Verschiebeweges S nur geringfügig zu. Auf diese Weise ist es möglich, den Volumenstrom Q mit hoher Genauigkeit für kleine Volumenströme einzustellen. Dies wird dadurch erreicht, daß der Druck P mit zunehmenden Verschiebeweg S linear zunimmt.

Eine noch stärkere Progressivität des Volumenstromes Q abhängig vom Verschiebeweg S wird erreicht, indem die zweite Feder 7 eine progressive Federkennlinie aufweist, d. h. daß die Federkraft mehr als proportional mit dem Verschiebeweg S ansteigt.

Für eine hohe Konstanz des eingestellten Volumenstromes Q ist es vorteilhaft, das Druckventil so auszulegen, daß eine Rückwirkung auf die Volumenregelung möglichst gering ausfällt. Dazu werden die Flächen des Druckventils, auf die der Druck des Kraftstoffes einwirkt, möglichst klein gehalten. Dies wird in Figur 1 z. B. dadurch erreicht, daß der Kolben 8 nur mit einer sehr kleinen Fläche die Druckkammer 9 begrenzt, so daß die zweite Feder 7 nur eine geringe Federkraft benötigt.

In Figur 2 wird dazu die Fläche, mit der die zweite Hülse 40 die Druckkammer 9 begrenzt, klein gehalten, so daß die zweite Feder 7 nur eine kleine Federkraft benötigt. In Figur 4 wird dies dadurch erreicht, daß die Verbindungshülse 22 nur eine sehr kleine Durchflußöffnung aufweist. so daß eine zweite Feder 7 verwendet werden kann, die eine geringe Federkraft (Federsteifigkeit) aufweist.

**Patentansprüche**

1. Vorrichtung zum Regeln eines Volumenstromes mit

   - einer Hülse (2), in die eine Zulauföffnung (3) und eine Austrittsöffnung (5) eingebracht sind;
   - mit einem bewegbaren Schließglied (1), das in die Hülse (2) eingebracht ist und das derart geformt ist, daß das Schließglied (1) und die Hülse (2) einen Druckraum (4) begrenzen;
   - der Druckraum (4) ist in einer Ruheposition des Schließgliedes (1) mit der Zulauföffnung (3) und in einer Arbeitsposition des Schließgliedes (1) mit der Zulauföffnung (3) und mindestens teilweise mit der Austrittsöffnung (5) verbunden;
   - das Schließglied (1) weist eine Durchführung (10,11;42) auf, die den Druckraum (4) mit einer Ablauföffnung (12) verbindet, wobei die Durchführung mit einem Verschlußstück (8,23,40) verschließbar ist;
   - das Verschlußstück (8;23;40) wird von einem Halteelement (7) in der Verschlußposition gehalten;
   - das Schließglied (1) und das Verschlußstück (8;23;40) sind derart angeordnet sind, daß bei einer Bewegung des Schließgliedes (1) von der Ruheposition in die Arbeitsposition die Kraft, mit der das Verschlußstück (8;23;40) vom Volumenstrom bewegt werden muß, um die Durchführung (10,11;42) zu öffnen, erhöht wird.

2. Vorrichtung nach Anspruch 1, dadurch gekennzeichnet,

   daß das Schließglied (1) und das Verschlußstück (8;40) derart in der Hülse (2) angeordnet sind, daß sie unabhängig voneinander in Längsrichtung der Hülse (2) verschiebbar sind,
   daß das Schließglied (1) beim Übergang in die Arbeitsposition gegegenüber dem Verschlußstück (8;40) in Richtung gegen die Haltewirkung des Halteelementes (7) verschoben wird und dadurch die Durchführung (11;42) gegenüber der Position des Verschlußstückes (40;8) in Richtung gegen die Haltewirkung des Halteelementes (7) verschoben wird.

3. Vorrichtung nach Anspruch 1, dadurch gekennzeichnet, daß
   das Verschlußstück (23) und das Schließglied (1) derart in der Hülse (2) angeordnet sind, daß beim Verschieben des Schließgliedes (1) in die Arbeitsposition das Verschlußstück (23) gegen die Haltewirkung des Halteelementes (7) verschoben wird, wobei die Durchführung (10,22) vom Verschlußstück (23) verschlossen bleibt und sich die Kraft, mit der das Verschlußstück (23) auf der Durchführung (10,22) gehalten wird, erhöht.

4. Vorrichtung zum Regeln eines Volumenstromes mit

   - einer beidseitig abgeschlossenen Hülse (2) mit einem in Längsrichtung der Hülse (2) bewegbaren Schließglied (1) und mit einem in Längsrichtung der Hülse (2) bewegbaren Kolben (43), wobei das Schließglied (1) und der Kolben (42) gegenüberliegend in der Hülse (2) eingebracht sind und derart geformt sind, daß das Schließglied (1), der Kolben (43) und die Hülse (2) einen Druckraum (4) begrenzen;
   - in die Hülse (2) ist eine Zulauföffnung (2) im Bereich des Druckraumes (4), eine Ablauföffnung (12) im Bereich des Druckraumes (4) angrenzend an den Kolben (43) und eine Austrittsöffnung (5) im Bereich des Druckraumes (4) angrenzend an das Schließglied (1) eingebracht;
   - zwischen dem oberen Ende der Hülse (2) und dem Kolben (43) ist eine dritte Feder (36), zwischen dem Kolben (43) und dem Schließglied (1) ist eine vierte Feder (37) und zwischen dem Schließglied (1) und dem unteren Ende der Hülse (2) ist eine fünfte Feder (37) angeordnet;
   - das Schließglied (1), der Kolben (43), die dritte, die vierte, und die fünfte Feder (36,37,38) sind derart dimensioniert, daß der Druckraum (4) in der Ruheposition des Schließgliedes (1) mit der Zulauföffnung (3) und mindestens teilweise mit der Ablauföffnung (12) verbunden ist, daß in einer Arbeitsposition des Schließgliedes (1) der Druckraum (4) mit der Zulauföffnung (3), mit der ersten Ablauföffnung (12) und mindestens teilweise mit der Austrittsöffnung (5) verbunden ist, wobei der offene Querschnitt der Ablauföffnung (12) annähernd konstant bleibt.

**5.** Vorrichtung nach Anspruch 1, dadurch gekennzeichnet, daß das Schließglied (1) derart geformt ist, daß es mit der Hülse (2) eine Auslaßkammer (20) begrenzt, daß die Durchführung (10,11) vom Druckraum (4) zur Auslaßkammer (20) führt, daß die Auslaßkammer (20,21) eine Ablauföffnung (12) aufweist, daß die zweite Feder (7) in der Auslaßkammer (20) angeordnet ist und der Bewegung des Abschlußstückes (23) in der Bewegungsrichtung des Schließgliedes (1) von der Ruheposition zur Arbeitsposition entgegenwirkt.

**6.** Vorrichtung nach Anspruch 1, dadurch gekennzeichnet, daß in das Schließglied (1) eine Druckkammer (9) eingebracht ist, die von dem Schließglied (1) und von dem Verschlußstück (8) begrenzt wird, daß die Druckkammer (9) über die Durchführung (11) mit einer Auslaßkammer (20) verbunden ist, daß die Druckkammer (9) über eine Verbindungsöffnung (10) mit dem Druckraum (4) verbunden ist, daß zwischen das Verschlußstück (8) und dem oberen Ende der Hülse (2) eine zweiten Feder (7) gespannt ist, die einer Bewegung des Verschlußstückes (8) in der Bewegungsrichtung des Schließgliedes (1) von der Ruheposition zur Arbeitsposition entgegenwirkt.

**7.** Vorrichtung nach Anspruch 5 , dadurch gekennzeichnet, daß eine erste Feder (6) in der Auslaßkammer (20) zwischen dem Schließglied (1) und dem oberen Ende der Hülse (2) derart angeordnet ist, daß die erste Feder (6) einer Bewegung des Schließgliedes (1) von der Ruheposition zur Arbeitsposition entgegenwirkt, und daß Mittel (26) zum Bewegen des Schließgliedes (1) angeordnet sind.

**8.** Vorrichtung nach Anspruch 5 oder 6, dadurch gekennzeichnet, daß die Auslaßkammer (20), der Druckraum (4), die Druckkammer (9), die Auslaßkammer (20) und das Schließglied (1) radialsymmetrisch zu einer Mittensymmetrielinie (25) ausgebildet sind, die mittig und in Längsrichtung zur Hülse (2) angeordnet ist.

**9.** Vorrichtung nach Anspruch 5 und 6, dadurch gekennzeichnet, daß die Auslaßkammer (20) über die Ablauföffnung (12), der Druckraum (4) über die Zulauföffnung (3) und die Austrittsöffnung (5) an radial umlaufende Umlaufnuten (27,28,29) angeschlossen sind, die in die Außenseite der Hülse (2) eingebracht sind.

**10.** Vorrichtung nach Anspruch 5 und 6, dadurch gekennzeichnet, daß mehrere Zulauföffnungen (3) und mehrere Ablauföffnungen (12) jeweils auf einem Kreis senkrecht zu einer Mittensymmetrielinie (25) im gleichen Winkelabstand zueinander angeordnet sind.

**Claims**

**1.** Device for the regulation of a volumetric flow with

- a sleeve (2) into which an inlet opening (3) and an exit opening (5) are incorporated;
- a moveable closing element (1) which is incorporated into the sleeve (2) and which is formed in such a way that the closing element (1) and the sleeve (2) delimit a pressure cavity (4);
- the pressure cavity (4) is connected with the inlet opening (3) when the closing element (1) is in an idle position, and with the inlet opening (3) and at least partially with the exit opening (5) when the closing element (1) is in an operating position;
- the closing element (1) has a feed-through (10,11;42) which connects the pressure cavity (4) with an outlet opening (12), where the feed-through can be closed off with a sealing piece (8,23;40);
- the sealing piece (8;23;40) is kept in the sealing position by means of a holding element (7);
- the closing element (1) and the sealing piece (8;23;40) are arranged in such a way that when a movement of the closing element (1) occurs from the idle position into the operating position the force with which the sealing piece (8;23;40) has to be moved by the volumetric flow in order to open the feed-through (10,11;42) is increased.

**2.** Device in accordance with claim 1, characterised in that the closing element (1) and the sealing piece (8;40) are arranged in such a way in the sleeve (2) that they can be shifted independently of one another in the longitudinal direction of the sleeve (2), and that, during the transition into the operating position with respect to the sealing piece (8;40), the closing element (1) is moved in the opposite direction to the retaining effect of the holding element (7), and the feed-through (11;42) is thereby moved in the opposite direction to said retaining effect with respect to the position of the sealing piece (40;8).

**3.** Device in accordance with claim 1, characterised in that the sealing piece (23) and the closing element (1) are arranged in such a way in the sleeve (2) that when the closing element (1) is moved into the operating position the sealing piece (23) is moved in the opposite direction to the retaining effect of the holding element (7), in which case the feed-through (10;22) remains sealed off by the sealing piece (23) and the force with which the sealing piece (23) is held on the feed-through (10;22) is increased.

4. Device for the regulation of a volumetric flow comprising

   - a sleeve (2) sealed off on both sides, with a closing element (1) which is moveable in the longitudinal direction of the sleeve (2), and with a piston (43) which is capable of moving in the longitudinal direction of the sleeve (2), where the closing element (1) and the piston (42) are situated opposite one another in the sleeve (2) and are formed in such a way that the closing element (1), the piston (43) and the sleeve (2) delimit a pressure cavity (4);
   - incorporated into the sleeve (2) are an inlet opening (2) in the area of the pressure cavity (4), an outlet opening (12) in the area of the pressure cavity (4) adjacent to the piston (43), and an exit opening (5) in the area of the pressure cavity (4) adjacent to the closing element (1);
   - a third spring (36) located between the upper end of the sleeve (2) and the piston (43), a fourth spring (37) located between the piston (43) and the closing element (1), and a fifth spring (37) located between the closing element (1) and the lower end of the sleeve (2);
   - the closing element (1), the piston (43), the third, fourth and fifth springs (36,37,38) are dimensioned such that, when the closing element (1) is in the idle position, the pressure cavity (4) is connected with the inlet opening (3) and at least partially with the outlet opening (12), and that, when the closing element (1) is in an operating position, the pressure cavity (4) is connected with the inlet opening (3), with the first outlet opening (12) and at least partially with the exit opening (5), in which case the open cross-sectional area of the outlet opening (12) remains approximately constant.

5. Device in accordance with claim 1, characterised in that the closing element (1) is formed in such a way that, together with the sleeve (2), it delimits an outlet chamber (20), that the feed-through (10;11) from the pressure cavity (4) leads to the outlet chamber (20), that the outlet chamber (20,21) has an outlet opening (12), that the second spring (7) is situated in the outlet chamber (20) and counteracts the movement of the closing piece (23) in the direction of movement of the closing element (1) from the idle position to the operating position.

6. Device in accordance with claim 1, characterised in that a pressure chamber (9) which is delimited by the closing element (1) and by the sealing piece (8) is incorporated into the closing element (1), that the pressure chamber (9) is connected with an outlet chamber (20) by way of the feed-through (11), that the pressure chamber (9) is connected with the pressure cavity (4) by way of a connecting opening (10), that a second spring (7) which counteracts a movement of the sealing piece (8) in the direction of movement of the closing element (1) from the idle position to the operating position is tensioned between the sealing piece (8) and the upper end of the sleeve (2).

7. Device in accordance with claim 5, characterised in that a first spring (6) is located in the outlet chamber (20) between the closing element (1) and the upper end of the sleeve (2) in such a way that the first spring (6) counteracts a movement of the closing element (1) from the idle position to the operating position, and that means (26) are provided in order to move the closing element (1).

8. Device in accordance with claim 5 or 6, characterised in that the outlet chamber (20), the pressure cavity (4), the pressure chamber (9), the outlet chamber (20) and the closing element (1) are arranged in radial symmetry with respect to a centrosymmetrical axis (25) which is concentric with, and runs in the longitudinal direction of, the sleeve (2).

9. Device in accordance with claims 5 and 6, characterised in that the outlet chamber (20) - by way of the outlet opening (12)-, the pressure cavity (4) - by way of the inlet opening (3)- , and the exit opening (5), are connected to circumferential grooves (27,28,29) which run radially and are incorporated into the outside of the sleeve (2).

10. Device in accordance with claims 5 and 6, characterised in that multiple inlet openings (3) and multiple outlet openings (12) are in each case located in a circle in a plane perpendicular to a centrosymmetrical axis (25) at the same angular distance from one another.

**Revendications**

1. Dispositif pour la régulation d'un débit volumique comprenant :

   - une douille (2) dans laquelle sont pratiquées une ouverture d'arrivée (3) et une ouverture de sortie (5) ;
   - un organe obturateur mobile (1) qui est logé dans la douille (2) et qui est conformé de telle manière que l'organe obturateur (1) et la douille (2) délimitent une chambre de pression (4) ;
   - dans une position de repos de l'organe obturateur (1), la chambre de pression (4) est reliée à l'ouverture d'arrivée (3) et, dans une position de travail de l'organe obturateur (1), elle est reliée à l'ouverture d'arrivée (3) et au moins partiellement à l'ouverture de sortie (5) ;

- l'organe obturateur (1) présente un passage (10, 11 ; 42) qui relie la chambre de pression (4) à une ouverture d'écoulement (12), le passage pouvant être obturé par une pièce obturatrice (8 ; 23 ; 40) ;

- la pièce obturatrice (8 ; 23 ; 40) est maintenue dans la position d'obturation par un élément de retenue (7);

- l'organe obturateur (1) et la pièce obturatrice (8 ; 23 ; 40) sont disposés de telle manière qu'en réponse à un déplacement de l'organe obturateur (1) de la position de repos à la position de travail, la force avec laquelle la pièce obturatrice (8 ; 23 ; 40) doit être déplacée par le débit volumique pour ouvrir le passage (10, 11 ; 42) soit augmentée.

2. Dispositif selon la revendication 1, caractérisé en ce que l'organe obturateur (1) et la pièce obturatrice (8 ; 40) sont disposés dans la douille (2) de telle manière qu'ils puissent se déplacer indépendamment l'un de l'autre dans la direction longitudinale de la douille (2),

et en ce que l'organe obturateur (1), lors de son passage à la position de travail, est déplacé par rapport à la pièce obturatrice (8 ; 40) dans le sens opposé à l'action de retenue de l'élément de retenue (7) et que, de ce fait, le passage (11 ; 42) est déplacé par rapport à la position de la pièce obturatrice (40 ; 8) en sens inverse de l'action de retenue de l'élément de retenue (7).

3. Dispositif selon la revendication 1, caractérisé en ce que la pièce obturatrice (23) et l'organe obturateur (1) sont disposés dans la douille (2) de telle manière que, lorsque l'organe obturateur vient prendre la position de travail, la pièce obturatrice (23) soit déplacée à l'encontre de l'action de retenue de l'élément de retenue (7), le passage (10, 22) restant fermé par la pièce obturatrice (23), et la force avec laquelle la pièce obturatrice (23) est tenue sur le passage (10, 22) étant augmentée.

4. Dispositif pour la régulation d'un débit volumique, comprenant

- une douille (2) fermée des deux côtés, avec un organe obturateur (1) mobile dans la direction longitudinale de la douille et un piston (43) mobile dans la direction longitudinale de la douille (2), l'organe obturateur (1) et le piston (42) étant logés l'un à l'opposé de l'autre dans la douille (2) et étant conformés de manière que l'organe obturateur (1), le piston (43) et la douille (2) délimitent une chambre de pression (4) ;

- dans la douille (2), sont formées une ouverture d'arrivée (2), dans la région de la chambre de pression (4), une ouverture d'écoulement (12), dans la région de la chambre de pression (4), en position contiguë au piston (43), et une ouverture de sortie (5), dans la région de la chambre de pression (4), en position contiguë à l'organe obturateur (1) ;

- un troisième ressort (36) est disposé entre l'extrémité supérieure de la douille (2) et le piston (43). un quatrième ressort (37) est disposé entre le piston (43) et l'organe obturateur (1), et un cinquième ressort (37) est disposé entre l'organe obturateur (1) et l'extrémité inférieure de la douille (2) ;

- l'organe obturateur (1), le piston (43), le troisième, le quatrième et le cinquième ressorts (36, 37, 38) sont dimensionnés de manière que la chambre de pression (4) soit reliée à l'ouverture d'arrivée (3) et au moins partiellement à ; l'ouverture d'écoulement (12) dans la position de repos de l'organe obturateur (1), que la chambre de pression (4) soit reliée à l'ouverture d'arrivée (3), à l'ouverture d'écoulement (12) et au moins partiellement à l'ouverture de sortie (5) dans une position de travail de l'organe obturateur (1), la section ouverte de l'ouverture d'écoulement (12) restant à peu près constante.

5. Dispositif selon la revendication 1, caractérisé en ce que l'organe obturateur (1) est conformé de manière à délimiter une chambre de décharge (20) avec la douille (2), en ce que le passage (10, 11) mène de la chambre de pression (4) à la chambre de décharge (20), en ce que la chambre de décharge (20, 21) présente une ouverture d'écoulement (12), en ce que le deuxième ressort (7) est disposé dans la chambre de décharge (20) et exerce une action antagoniste au déplacement de la pièce obturatrice (23) dans la direction du déplacement de l'organe obturateur (1) de la position de repos à la position de travail.

6. Dispositif selon la revendication 1, caractérisé en ce que, dans l'organe obturateur (1), est formée une chambre de pression (9) qui est limitée par l'organe obturateur (1) et par la pièce obturatrice (8), en ce que la chambre de pression (9) est reliée à une chambre de décharge (20) par le passage (11), en ce que la chambre de pression (9) est reliée à la chambre de pression (4) par une ouverture de liaison (10), en ce qu'entre la pièce obturatrice (8) et l'extrémité supérieure de la douille (2), est tendu un deuxième ressort (7) qui exerce une action antagoniste à un mouvement de la pièce obturatrice (8) dans la direction du mouvement de l'organe obturateur (1) de la position de repos à la position de travail.

7. Dispositif selon la revendication 5, caractérisé en ce qu'un premier ressort (6) est disposé dans la chambre de décharge (20) entre l'organe obturateur (1) et l'extrémité supérieure de la douille (2), de telle manière que le premier ressort (6) exerce une action antagoniste à un déplacement de l'organe obturateur (1) de la position de repos à la position de travail, et en ce que des moyens (26) sont prévus pour le déplacement de l'organe obturateur (1).

8. Dispositif selon la revendication 5 ou 6, caractérisé en ce que la chambre de décharge (20), la chambre de pression (4), la chambre de pression (9). la chambre de décharge (20) et l'organe obturateur (1) sont conformés symétriquement par rapport à une ligne de symétrie centrale (25) qui est disposée en position centrale et dans la direction longitudinale de la douille (2).

9. Dispositif selon les revendications 5 et 6, caractérisé en ce que la chambre de décharge (20) et la chambre de pression (4) sont raccordées, la première par l'ouverture d'écoulement (12), la deuxième par l'ouverture d'arrivée (3) et l'ouverture de sortie (5), à des gorges circonférentielles (27, 28, 29) s'étendant circonférentiellement dans une disposition radiale, qui sont ménagées dans la face extérieure de la douille (2).

10. Dispositif selon les revendications 5 et 6, caractérisé en ce que plusieurs ouvertures d'arrivée (3) et plusieurs ouvertures d'écoulement (12) sont respectivement disposées sur un cercle, perpendiculairement à une ligne de symétrie centrale (25) au même écartement angulaire mutuel.

# FIG 1

FIG 2

FIG 3

# FIG 4

FIG 5

## FIG 6

Form der
Austrittsöffnung 5

## FIG 7

Form der
Austrittsöffnung 5